(19) Europäisches Patentamt
European Patent Office
Office européen des brevets

(11) **EP 4 760 713 A1**

(12) **EUROPEAN PATENT APPLICATION**
published in accordance with Art. 153(4) EPC

(43) Date of publication:
**17.06.2026 Bulletin 2026/25**

(21) Application number: **24850819.4**

(22) Date of filing: **26.07.2024**

(51) International Patent Classification (IPC):
**G10L 17/04** (2013.01)   **G10L 17/02** (2013.01)
**G10L 25/48** (2013.01)   **H04L 9/40** (2022.01)

(52) Cooperative Patent Classification (CPC):
**G10L 17/04; G10L 25/48; Y02T 10/40**

(86) International application number:
**PCT/CN2024/107752**

(87) International publication number:
**WO 2025/031170 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.08.2023 CN 202311007339**

(71) Applicant: **Alipay (Hangzhou) Digital Service Technology Co., Ltd.**
**Hangzhou, Zhejiang 310000 (CN)**

(72) Inventors:
• **WANG, Feng**
**Hangzhou, Zhejiang 310000 (CN)**
• **CHEN, Guangke**
**Hangzhou, Zhejiang 310000 (CN)**
• **SONG, Fu**
**Hangzhou, Zhejiang 310000 (CN)**
• **WANG, Jiashui**
**Hangzhou, Zhejiang 310000 (CN)**

(74) Representative: **Winter, Brandl - Partnerschaft mbB**
**Alois-Steinecker-Straße 22**
**85354 Freising (DE)**

(54) **VOICEPRINT RECOGNITION SYSTEM EVALUATION METHOD AND APPARATUS, STORAGE MEDIUM, AND ELECTRONIC DEVICE**

(57)    This specification discloses a voiceprint recognition system evaluation method and apparatus, a storage medium, and an electronic device. In the voiceprint recognition system evaluation method provided in this specification, a to-be-evaluated target voiceprint recognition system and a to-be-optimized adversarial sample are obtained, and a recognition type of the target voiceprint recognition system is determined; the to-be-optimized adversarial sample is inputted into the target voiceprint recognition system to obtain a recognition result of the target voiceprint recognition system for the to-be-optimized adversarial sample; the to-be-optimized adversarial sample is adjusted based on the recognition result in a preset manner corresponding to the recognition type, to obtain a voice adversarial sample; the target voiceprint recognition system is attacked by using the voice adversarial sample; and an evaluation result of the target voiceprint recognition system is determined based on an attack result of the voice adversarial sample against the target voiceprint recognition system.

FIG. 1

**Description**

## TECHNICAL FIELD

This specification relates to the field of computer technologies, and in particular, to a voiceprint recognition system evaluation method and apparatus, a storage medium, and an electronic device.

## BACKGROUND

Nowadays, voiceprint recognition has been widely applied to various fields. One of the most common applications is to analyze a voice of a user to verify an identity of the user. For example, the user may unlock a terminal device, for example, a mobile phone or a computer through the voice, and may wake up a voice assistant and gives an instruction or the like by saying an instruction.

However, with continuous development of science and technologies, security threats faced by a voiceprint recognition technology also increase rapidly. Currently, a voice synthesis technology is also very developed. By using this technology, an attacker may readily synthesize the voice of the user and impersonates the identity of the user, leading to a huge threat to privacy and benefits of the user.

To protect the privacy and the benefits of the user, whether a voiceprint recognition system can effectively defend against attacks and breaches is of great importance. However, currently, there is no mature method that can evaluate security of the voiceprint recognition system, and a security level of the voiceprint recognition system cannot be accurately known.

Therefore, how to effectively evaluate the security of the voiceprint recognition system is a problem to be urgently resolved.

## SUMMARY

This specification provides a voiceprint recognition system evaluation method and apparatus, a storage medium, and an electronic device, to at least partially resolve the foregoing problems existing in the related technology.

This specification uses the following technical solutions. This specification provides a voiceprint recognition system evaluation method, including: obtaining a to-be-evaluated target voiceprint recognition system and a to-be-optimized adversarial sample, and determining a recognition type of the target voiceprint recognition system; inputting the to-be-optimized adversarial sample into the target voiceprint recognition system to obtain a recognition result of the target voiceprint recognition system for the to-be-optimized adversarial sample; adjusting the to-be-optimized adversarial sample in a preset manner corresponding to the recognition type based on the recognition result, to obtain a voice adversarial sample; attacking the target voiceprint recognition system by using the voice adversarial sample; and determining an evaluation result of the target voiceprint recognition system based on an attack result of the voice adversarial sample against the target voiceprint recognition system.

Optionally, the recognition type includes at least one of open-set speaker recognition, closed-set speaker recognition, and speaker determining. The open-set speaker recognition is for recognizing whether an original speaker is a user in an open-set registered speaker group. The closed-set speaker recognition is for recognizing whether an original speaker is a user in a closed-set registered speaker group. The speaker determining is for recognizing whether an original speaker is a registered speaker.

Optionally, the recognition type is the open-set speaker recognition. An attack type of a voice adversarial sample that needs to be obtained is that an unrelated speaker impersonates a first specified user in the open-set registered speaker group. The adjusting the to-be-optimized adversarial sample in a preset manner corresponding to the recognition type specifically includes: adjusting the to-be-optimized adversarial sample by using an optimization objective that a probability of the to-be-optimized adversarial sample being recognized as the first specified user in the target voiceprint recognition system is the highest.

Optionally, the recognition type is the open-set speaker recognition. An attack type of a voice adversarial sample that needs to be obtained is an attack directly carried out by an unrelated speaker. The adjusting the to-be-optimized adversarial sample in a preset manner corresponding to the recognition type specifically includes: adjusting the to-be-optimized adversarial sample by using an optimization objective that a probability of the to-be-optimized adversarial sample being recognized as any user in the open-set registered speaker group in the target voiceprint recognition system is not greater than a specified threshold.

Optionally, the recognition type is the open-set speaker recognition. An attack type of a voice adversarial sample that needs to be obtained is that a second specified user in the open-set registered speaker group impersonates any other user in the open-set registered speaker group. The adjusting the to-be-optimized adversarial sample in a preset manner corresponding to the recognition type specifically includes: adjusting the to-be-optimized adversarial sample by using an optimization objective that a probability of the to-be-optimized adversarial sample being recognized as the second specified user in the target voiceprint recognition system is the lowest, and a probability of the to-be-optimized adversarial sample being recognized as the any other user is the highest.

Optionally, the recognition type is the open-set speaker recognition. An attack type of a voice adversarial sample that needs to be obtained is that an unrelated speaker impersonates any user in the open-set registered speaker group. The adjusting the to-be-optimized adversarial sample in a preset manner corresponding to the recognition type specifically includes: adjusting the to-be-optimized adversarial sample by using an optimization objective that a probability of the to-be-optimized adversarial sample being recognized as the any user in the open-set registered speaker group in the target voiceprint recognition system is the highest.

Optionally, the recognition type is the closed-set speaker recognition. An attack type of a voice adversarial sample that needs to be obtained is that any user in the closed-set registered speaker group impersonates a third specified user in the closed-set registered speaker group. The adjusting the to-be-optimized adversarial sample in a preset manner corresponding to the recognition type specifically includes: adjusting the to-be-optimized adversarial sample by using an optimization objective that a probability of the to-be-optimized adversarial sample being recognized as the third specified user in the target voiceprint recognition system is the highest.

Optionally, the recognition type is the closed-set speaker recognition. An attack type of a voice adversarial sample that needs to be obtained is that a fourth specified user in the closed-set registered speaker group impersonates any other user in the closed-set registered speaker group. The adjusting the to-be-optimized adversarial sample in a preset manner corresponding to the recognition type specifically includes: adjusting the to-be-optimized adversarial sample by using an optimization objective that a probability of the to-be-optimized adversarial sample being recognized as the fourth specified user in the target voiceprint recognition system is the lowest, and a probability of the to-be-optimized adversarial sample being recognized as the any other user in the closed-set registered speaker group is the highest.

Optionally, the recognition type is the speaker determining. An attack type of a voice adversarial sample that needs to be obtained is registered speaker testing. The adjusting the to-be-optimized adversarial sample in a preset manner corresponding to the recognition type specifically includes: adjusting the to-be-optimized adversarial sample by using an optimization objective that a probability of the to-be-optimized adversarial sample being recognized as the registered speaker in the target voiceprint recognition system is the lowest.

Optionally, the recognition type is the speaker determining. An attack type of a voice adversarial sample that needs to be obtained is that an unrelated speaker impersonates the registered speaker. The adjusting the to-be-optimized adversarial sample in a preset manner corresponding to the recognition type specifically includes: adjusting the to-be-optimized adversarial sample by using an optimization objective that a probability of the to-be-optimized adversarial sample being recognized as the registered speaker in the target voiceprint recognition system is the highest.

Optionally, the adjusting the to-be-optimized adversarial sample in a preset manner corresponding to the recognition type, to obtain a voice adversarial sample specifically includes: obtaining a discrete sequence of the to-be-optimized adversarial sample; adjusting values in the discrete sequence of the to-be-optimized adversarial sample in the preset manner corresponding to the recognition type, to obtain a target discrete sequence; and determining the voice adversarial sample based on the target discrete sequence.

Optionally, the attacking the target voiceprint recognition system by using the voice adversarial sample specifically includes: scrambling the voice adversarial sample in a preset scrambling manner to obtain a simulated physical adversarial sample; and attacking the target voiceprint recognition system by using the simulated physical adversarial sample.

Optionally, the scrambling manner includes at least one of ambient noise interference, reverberation interference, and hardware interference.

Optionally, the evaluation result includes an adversarial success rate and adversarial overheads. The determining an evaluation result of the target voiceprint recognition system based on an attack result of the voice adversarial sample against the target voiceprint recognition system specifically includes: determining an attack success rate based on a quantity of incorrectly recognized voice adversarial samples in the recognition result of the target voiceprint recognition system and a total quantity of voice adversarial samples inputted into the target voiceprint recognition system; and determining attack overheads based on a cost of generating the voice adversarial sample and a quantity of times of querying the voice adversarial sample in the target voiceprint recognition system.

This specification provides a voiceprint recognition system evaluation apparatus, including: an obtaining module, configured to obtain a to-be-evaluated target voiceprint recognition system and a to-be-optimized adversarial sample, and determine a recognition type of the target voiceprint recognition system; an input module, configured to input the to-be-optimized adversarial sample into the target voiceprint recognition system to obtain a recognition result of the target voiceprint recognition system for the to-be-optimized adversarial sample; an optimization module, configured to adjust the to-be-optimized adversarial sample based on the recognition result in a preset manner corresponding to the recognition type, to obtain a voice adversarial sample; an attack module, configured to attack the target voiceprint recognition system by using the voice adversarial sample; and a determining module, configured to determine an evaluation result of the target voiceprint recognition system based on an attack result of the voice adversarial sample against the target voiceprint recognition system.

This specification provides a computer-readable storage medium. The storage medium stores a computer program. The computer program implements the foregoing voiceprint recognition system evaluation method when being executed by a processor.

This specification provides an electronic device, including a memory, a processor, and a computer program stored in the memory and capable of being run on the processor. The processor implements the foregoing voiceprint recognition system evaluation method when executing the program.

The at least one technical solution used in this specification can achieve the following beneficial effects. In the voiceprint recognition system evaluation method provided in this specification, a to-be-evaluated target voiceprint recognition system and a to-be-optimized adversarial sample are obtained, and a recognition type of the target voiceprint recognition system is determined; the to-be-optimized adversarial sample is inputted into the target voiceprint recognition system to obtain a recognition result of the target voiceprint recognition system for the to-be-optimized adversarial sample; and the to-be-optimized adversarial sample is adjusted based on the recognition result in a preset manner corresponding to the recognition type, to obtain a voice adversarial sample; the target voiceprint recognition system is attacked by using the voice adversarial sample; and an evaluation result of the target voiceprint recognition system is determined based on an attack result of the voice adversarial sample against the target voiceprint recognition system.

When the target voiceprint recognition system is evaluated by using the voiceprint recognition system evaluation method provided in this specification, for scenarios corresponding to different attack manners in different recognition types, the voice adversarial sample may be generated in different manners. Finally, the target voiceprint recognition system is attacked by using the voice adversarial sample, and a final evaluation result is obtained. According to the method, a plurality of different attack manners can be covered during evaluation of the target voiceprint recognition system, to obtain an accurate and comprehensive evaluation result.

## BRIEF DESCRIPTION OF THE DRAWINGS

The accompanying drawings described herein are used to provide further understanding of this specification, and constitute a part of this specification. Exemplary embodiments of this specification and descriptions thereof are used to explain this specification rather than constituting an improper limitation to this specification. In the accompanying drawings:

FIG. 1 is a schematic flowchart of a voiceprint recognition system evaluation method according to this specification;
FIG. 2 is a schematic diagram of a process of propagation of an audio signal through a physical channel according to this specification;
FIG. 3 is a schematic diagram of a voiceprint recognition system evaluation apparatus according to this specification; and
FIG. 4 is a schematic diagram of an electronic device corresponding to FIG. 1 according to this specification.

## DETAILED DESCRIPTION

Usually, a voiceprint recognition system is used for analyzing a voice and verifying an identity to which the voice belongs. Although in most cases, the voiceprint recognition system has good security performance, when an attacker conducts special research and design against a voiceprint recognition system, the voiceprint recognition system may be deceived by the attacker.

Different from a manner in which human ears recognize a voice based on timbre, in a computer, a voice is converted into data such as a waveform and a sequence, and a source of the voice is determined by analyzing the data. This causes a case in which the voiceprint recognition system may be deceived in some scenarios, causing incorrect determining. For example, a piece of specially processed audio may be a voice of a user A when listened to human ears, but may be recognized as that of a person B by the voiceprint recognition system.

Because the voiceprint recognition system is usually used in user identity verification and another scenario, and is closely related to privacy and benefits of a user, whether the voiceprint recognition system can effectively sense and defend against attacks by attackers, that is, security performance of the voiceprint recognition system is of great importance.

To accurately obtain the security performance of the voiceprint recognition system when the voiceprint recognition system faces an attack, this specification provides a comprehensive and reliable voiceprint recognition system evaluation method.

To make the objectives, technical solutions, and advantages of this specification clearer, the technical solutions of this specification are clearly and completely described below with reference to specific embodiments of this specification and corresponding accompanying drawings. Apparently, the described embodiments are merely some embodiments rather than all embodiments of this specification. All other embodiments obtained by a person of ordinary skill in the art based on embodiments of this specification without creative efforts shall fall within the protection scope of this specification.

The following describes the technical solutions provided in embodiments of this specification in detail with reference to the accompanying drawings.

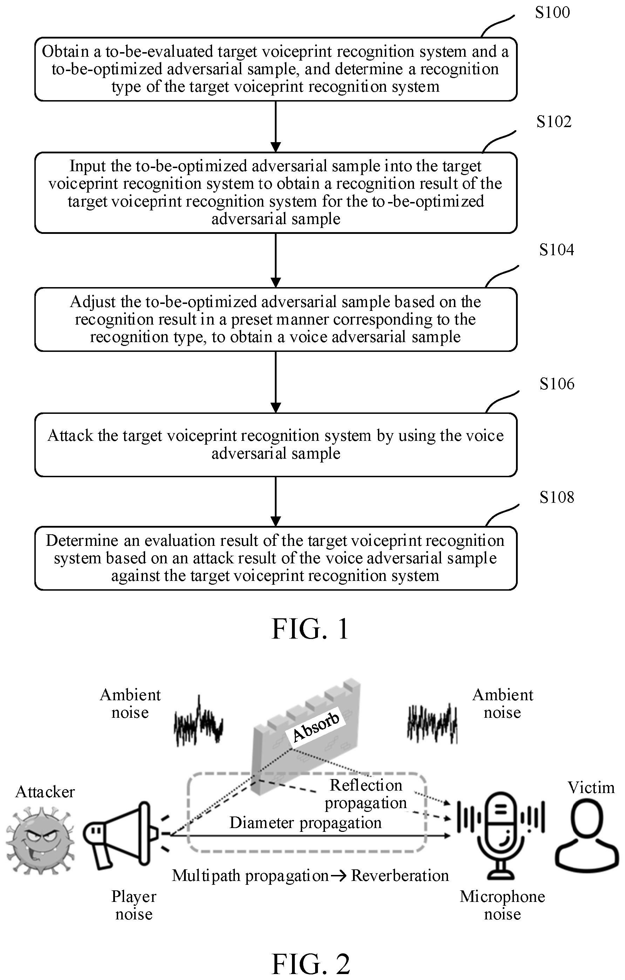

FIG. 1 is a schematic flowchart of a voiceprint recognition system evaluation method according to this specification, including the following step S100 to step S108.

S100: Obtain a to-be-evaluated target voiceprint recognition system and a to-be-optimized adversarial sample, and determine a recognition type of the target voiceprint recognition system.

In this specification, an execution entity configured to implement the voiceprint recognition system evaluation method may be a specified device, for example, a server, disposed on a service platform. For ease of description, an example in which the server is the execution entity is used in this specification to describe the voiceprint recognition system evaluation method provided in this specification.

The voiceprint recognition system evaluation method provided in this specification may be applied to evaluation of any voiceprint recognition system. Based on this, the target voiceprint recognition system that needs to be evaluated may be first obtained in this step. There may be a plurality of structures of the target voiceprint recognition system. This is not specifically limited in this specification. In addition, during evaluation of the voiceprint recognition system, a process of attacking the voiceprint recognition system needs to be simulated. Therefore, an adversarial sample used for simulating an attack on the voiceprint recognition system may further be obtained in this step. The adversarial sample may be data in a form of an audio. Because the adversarial sample has not been optimized or adjusted in this step, the adversarial sample is a to-be-optimized adversarial sample.

Further, in actual application, voiceprint recognition systems of different recognition types may exist based on different recognition manners of the voiceprint recognition system during recognition. Specifically, the recognition type includes at least one of open-set speaker recognition, closed-set speaker recognition, and speaker determining.

The open-set speaker recognition is for recognizing whether an original speaker is a user in an open-set registered speaker group, and is mostly applied to, for example, voice control on a smart home. The original speaker is a speaker to which a segment of voice originally belongs. The open-set registered speaker group is a set of several users, and the users included in the set are users of which identities can be verified. During the open-set speaker recognition, the original speaker may be any user.

The closed-set speaker recognition is for recognizing whether an original speaker is a user in a closed-set registered speaker group, and is mostly applied to organizations such as criminal detection. The original speaker is a speaker to which a segment of voice originally belongs. The closed-set registered speaker group is a set of several users, and the users included in the set are users of which identities can be verified. During the closed-set speaker recognition, the original speaker definitely is a user in the closed-set registered speaker group.

The speaker determining is for recognizing whether an original speaker is a registered speaker, and is mostly applied to a scenario, for example, login of a user account. The original speaker is a speaker to which a segment of voice originally belongs. The registered speaker is a user whose identity can be verified. There is one and only one registered speaker in the recognition type of speaker determining.

In this step, the recognition type of the obtained target voiceprint recognition system may be determined, and different processing is performed in subsequent steps based on different recognition types.

S102: Input the to-be-optimized adversarial sample into the target voiceprint recognition system to obtain a recognition result of the target voiceprint recognition system for the to-be-optimized adversarial sample.

In this step, the to-be-optimized adversarial sample obtained in step S100 may be inputted into the target voiceprint recognition system to obtain the recognition result of the target voiceprint recognition system for the to-be-optimized adversarial sample. There may be a plurality of representation forms of the recognition result, including, but not limited to, a confidence, a probability, and the like. This is not specifically limited in this specification.

For different recognition types, recognition results outputted by the target voiceprint recognition system may also have some differences. An example in which the recognition result is the confidence is used. When the recognition type is the open-set speaker recognition, the recognition result may be a vector, and each component in the vector indicates a confidence that the to-be-optimized adversarial sample is from each different user in the open-set registered speaker group. Similarly, when the recognition type is the closed-set speaker recognition, the recognition result may also be a vector, and each component in the vector indicates a confidence that the to-be-optimized adversarial sample is from each different user in the closed-set registered speaker group. When the recognition type is the speaker determining, the recognition result may be a scalar that indicates a confidence that the to-be-optimized adversarial sample is from the registered speaker.

Further, voiceprint recognition systems of different recognition types make final determining based on the recognition result in different manners. The foregoing example in which the recognition result is the confidence is still used.

When the recognition type is the open-set speaker recognition, there is a preset threshold, and only when a value of a component in the recognition result is the largest and is not less than the preset threshold, the to-be-optimized adversarial sample is determined as being from a user corresponding to the component. However, when the recognition type is the closed-set speaker recognition, there is no threshold, and when a value of a component in the recognition result is the largest, the to-be-optimized adversarial sample is determined as being from a user corresponding to the component. When the recognition type is the speaker determining, there is also a preset threshold, and when the confidence is not less than the preset threshold, the to-be-optimized adversarial sample may be determined as being from the registered speaker.

In this step, only the recognition result of the target voiceprint recognition system for the to-be-optimized adversarial sample needs to be obtained, and final determining of the target voiceprint recognition system on an identity to which the to-be-optimized adversarial sample belongs does not need to be obtained.

S104: Adjust the to-be-optimized adversarial sample based on the recognition result in a preset manner corresponding to the recognition type, to obtain a voice adversarial sample.

In this step, the to-be-optimized adversarial sample may be optimized and adjusted based on the recognition result of the target voiceprint recognition system for the to-be-optimized adversarial sample in step S102, to obtain a final voice adversarial sample. For different recognition types of the target voiceprint recognition system determined in step S100, preset different manners corresponding to the recognition types may be used to adjust the to-be-optimized adversarial sample.

Further, for different recognition types, there are a plurality of different attack scenarios. For example, for the recognition type of open-set speaker recognition, there may be an attack performed by an original speaker who is an unrelated speaker not belonging to the open-set registered speaker group and impersonates a specified user in the open-set registered speaker group, or there may be an attack performed by an original speaker who is a user in the open-set registered speaker group and impersonates another user in the open-set registered speaker group. In view of this, this specification herein provides methods for optimizing the to-be-optimized adversarial sample for various different situations in various different recognition types, to evaluate security performance of the target voiceprint recognition system in the various different situations. Specifically, in this specification, eight different optimization manners for optimizing the to-be-optimized adversarial sample are preset for scenarios in which voiceprint recognition systems of different recognition types are attacked by different attacks. The following sequentially describes each optimization manner by using the recognition result output by the target voiceprint recognition system as a probability.

In each of the different manners, there is a different loss function for adjusting the to-be-optimized adversarial sample. Some general expressions exist in loss functions, and are described herein. In the voiceprint recognition system evaluation method provided in this specification, L represents a loss function; x represents the to-be-optimized adversarial sample; S(x) represents a component in the recognition result; s represents the original speaker, that is, a speaker to which the to-be-optimized adversarial sample originally belongs; t represents a target speaker, that is, a speaker to which an adjusted to-be-optimized adversarial sample is intended to be recognized; G represents a registered speaker group; $\theta$ represents a threshold, and may be set based on a requirement; $\sigma$ represents a softmax function; $\varphi$ represents a sigmoid function; and both the softmax function and the sigmoid function are used for converting the recognition result into a probability when the recognition result is not a probability.

First, the open-set speaker recognition is considered. During the open-set speaker recognition, the original speaker may be any user, who may be a user from the open-set registered speaker group, or may be a user outside the group. Therefore, during the open-set speaker recognition, a threshold needs to be preset, and it is determined that identity verification succeeds only when the recognition result of the voiceprint recognition system is not less than the threshold. In the recognition types, an application scenario of the open-set speaker recognition is the most complex, and there is correspondingly a greater variety of situations corresponding to the open-set speaker recognition. This specification lists optimization manners of to-be-optimized adversarial samples corresponding to four different situations in the recognition type of open-set speaker recognition.

When the recognition type is the open-set speaker recognition, and an attack type of a voice adversarial sample that needs to be obtained is that an unrelated speaker impersonates a first specified user in the open-set registered speaker group, the to-be-optimized adversarial sample may be adjusted by using an optimization objective that a probability of the to-be-optimized adversarial sample being recognized as the first specified user in the target voiceprint recognition system is the highest.

In a scenario of attacking the voiceprint recognition system, a most common attack is carried out by the unrelated speaker. In the voiceprint recognition system evaluation method provided in this specification, the unrelated speaker is a user whose identity cannot be verified. That the unrelated speaker impersonates the first specified user in the open-set registered speaker group may be considered as a targeted attack, which means that during the attack, specific adjustment is performed on a voice belonging to the unrelated speaker, that is, the to-be-optimized adversarial sample, so that an adjusted voice adversarial sample is determined by the target voiceprint recognition system as belonging to the first specified user. For the attack type, the to-be-optimized adversarial sample may be optimized by using the following

formula.

$$L_{CE}(x, t) = -\log{[\sigma(S(x))]_t}$$

$$L_M(x, t) = \max_{i \in G, i \neq t}[S(x)]_i - [S(x)]_t$$

$$L_1(x, t) = - [S(x)]_t$$

$$L_2(x, t) = \max\{\theta, \max_{i \in G, i \neq t}[S(x)]_i\} - [S(x)]_t$$

t represents a target speaker, and is the first specified user in this example. i represents any user other than the first specified user in the open-set registered speaker group. G represents a registered speaker group, and is the open-set registered speaker group in this example. In the foregoing formula, $[S(x)]_t$ represents a probability in the recognition result that the to-be-optimized adversarial sample belongs to the first specified user, and $[S(x)]_i$ represents a probability in the recognition result that the to-be-optimized adversarial sample belongs to any other user in the open-set registered speaker group. In actual application, the foregoing at least one loss function may be selected for use. The to-be-optimized adversarial sample is adjusted by using an optimization objective that a value of the loss function is minimum, that is, the probability of the to-be-optimized adversarial sample being recognized as the first specified user in the target voiceprint recognition system is the highest.

When the recognition type is the open-set speaker recognition, and an attack type of a voice adversarial sample that needs to be obtained is an attack directly carried out by an unrelated speaker, the to-be-optimized adversarial sample is adjusted by using an optimization objective that a probability of the to-be-optimized adversarial sample being recognized as any user in the open-set registered speaker group in the target voiceprint recognition system is not greater than a specified threshold.

In a scenario of attacking the voiceprint recognition system, the attack directly carried out by the unrelated speaker may be considered as an attack directly initiated by the unrelated speaker with a voice without any adjustment. Usually, such an attack is unlikely to deceive the voiceprint recognition system, and is mostly used for detecting whether the voiceprint recognition system can implement basic determining. For the attack type, the to-be-optimized adversarial sample may be optimized by using the following formula.

$$L_{CE}^s(x, t) = \log{[\sigma(S(x))]_s}$$

$$L_1^s(x, t) = [S(x)]_s$$

$$L_3(x, t) = \max_{i \in G}[S(x)]_i - \theta$$

s represents the original speaker, and is the unrelated speaker in this example. i represents the any user in the open-set registered speaker group. G represents a registered speaker group, and is the open-set registered speaker group in this example. In the foregoing formula, $[S(x)]_s$ represents a probability in the recognition result that the to-be-optimized adversarial sample belongs to the unrelated speaker, and $[S(x)]_i$ represents a probability in the recognition result that the to-be-optimized adversarial sample belongs to the any user in the open-set registered speaker group. In actual application, the foregoing at least one loss function may be selected for use. The to-be-optimized adversarial sample is adjusted by using an optimization objective that a value of the loss function is minimum, that is, the probability of the to-be-optimized adversarial sample being recognized as the any user in the open-set registered speaker group in the target voiceprint recognition system is not greater than a specified threshold.

When the recognition type is the open-set speaker recognition, and an attack type of a voice adversarial sample that needs to be obtained is that a second specified user in the open-set registered speaker group impersonates any other user in the open-set registered speaker group, the to-be-optimized adversarial sample is adjusted by using an optimization objective that a probability of the to-be-optimized adversarial sample being recognized as the second specified user in the target voiceprint recognition system is the lowest, and a probability of the to-be-optimized adversarial sample being recognized as the any other user is the highest.

In a scenario of attacking the voiceprint recognition system, a user who is in the open-set registered speaker group may also become an attack initiator. An attack performed by the second specified user in the open-set registered speaker group who impersonates the any other user in the open-set registered speaker group may be considered as a non-targeted attack. For the attack type, the to-be-optimized adversarial sample may be optimized by using the following formula.

$$L_{CE}^s(x, t) = \log \left[\sigma(S(x))\right]_s$$

$$L_1^s(x, t) = [S(x)]_s$$

$$L_M^s(x, t) = [S(x)]_s - \max_{i \in G, i \neq s}[S(x)]_i$$

$$L_2^s(x, t) = \max\{\theta, [S(x)]_s\} - \max_{i \in G, i \neq s}[S(x)]_i$$

$$L_4^s(x, t) = -\max_{i \in G, i \neq s}[S(x)]_i$$

s represents the original speaker, and is the second specified user in this example. i represents the any user other than the second specified user in the open-set registered speaker group. G represents a registered speaker group, and is the open-set registered speaker group in this example. In the foregoing formula, $[S(x)]_s$ represents a probability in the recognition result that the to-be-optimized adversarial sample belongs to the second specified user, and $[S(x)]_i$ represents a probability in the recognition result that the to-be-optimized adversarial sample belongs to the any user other than the second specified user in the open-set registered speaker group. In actual application, the foregoing at least one loss function may be selected for use. The to-be-optimized adversarial sample is adjusted by using an optimization objective that a value of the loss function is minimum, that is, the probability of the to-be-optimized adversarial sample being recognized as the second specified user in the target voiceprint recognition system is the lowest, and a probability of the to-be-optimized adversarial sample being recognized as the any other user is the highest.

When the recognition type is the open-set speaker recognition, and an attack type of a voice adversarial sample that needs to be obtained is that an unrelated speaker impersonates any user in the open-set registered speaker group, the to-be-optimized adversarial sample may be adjusted by using an optimization objective that a probability of the to-be-optimized adversarial sample being recognized as the any user in the open-set registered speaker group in the target voiceprint recognition system is the highest.

In a scenario of attacking the voiceprint recognition system, in addition to a user in the open-set registered speaker group, the unrelated speaker may also initiate a non-targeted attack, that is, an attack performed by the unrelated speaker who impersonates the any user in the open-set registered speaker group. For the attack type, the to-be-optimized adversarial sample may be optimized by using the following formula.

$$L_3^-(x, t) = -L_3(x, t) = \theta - \max_{i \in G}[S(x)]_i$$

i represents the any user in the open-set registered speaker group. G represents a registered speaker group, and is the open-set registered speaker group in this example. In the foregoing formula, $[S(x)]_i$ represents a probability in the recognition result that the to-be-optimized adversarial sample belongs to the any user in the open-set registered speaker group. In actual application, the foregoing at least one loss function may be selected for use. The to-be-optimized adversarial sample is adjusted by using an optimization objective that a value of the loss function is minimum, that is, a probability of the to-be-optimized adversarial sample being recognized as the any user in the open-set registered speaker group in the target voiceprint recognition system is the highest.

In addition, the closed-set speaker recognition is considered. During the closed-set speaker recognition, the original speaker definitely is one of users in the closed-set registered speaker group. In other words, the original speaker definitely is a user whose identity can be verified. Therefore, during the closed-set speaker recognition, there is no threshold, and a user identity corresponding to a component having a highest probability in the recognition result is directly determined as the identity of the original speaker. This specification lists optimization manners of to-be-optimized adversarial samples corresponding to two different situations in the recognition type of closed-set speaker recognition.

When the recognition type is the closed-set speaker recognition, and an attack type of a voice adversarial sample that needs to be obtained is that any user in the closed-set registered speaker group impersonates a third specified user in the closed-set registered speaker group, the to-be-optimized adversarial sample may be adjusted by using an optimization objective that a probability of the to-be-optimized adversarial sample being recognized as the third specified user in the target voiceprint recognition system is the highest.

In a scenario of attacking the voiceprint recognition system, a user in the closed-set registered speaker group may impersonate a fixed user, that is, the third specified user, in the closed-set registered speaker group. For the attack type, the to-be-optimized adversarial sample may be optimized by using the following formula.

$$L_{CE}(x, t) = -\log\left[\sigma(S(x))\right]_t$$

$$L_M(x, t) = \max_{i \in G, i \neq t}[S(x)]_i - [S(x)]_t$$

$$L_1(x, t) = -[S(x)]_t$$

t represents a target speaker, and is the third specified user in this example. i represents the any user other than the third specified user in the closed-set registered speaker group. G represents a registered speaker group, and is the closed-set registered speaker group in this example. In the foregoing formula, $[S(x)]_t$ represents a probability in the recognition result that the to-be-optimized adversarial sample belongs to the third specified user, and $[S(x)]_i$ represents a probability in the recognition result that the to-be-optimized adversarial sample belongs to the any user other than the third specified user in the closed-set registered speaker group. In actual application, the foregoing at least one loss function may be selected for use. The to-be-optimized adversarial sample is adjusted by using as an optimization objective that a value of the loss function is minimum, that is, the probability of the to-be-optimized adversarial sample being recognized as the third specified user in the target voiceprint recognition system is the highest.

When the recognition type is the closed-set speaker recognition, and an attack type of a voice adversarial sample that needs to be obtained is that a fourth specified user in the closed-set registered speaker group impersonates any other user in the closed-set registered speaker group, the to-be-optimized adversarial sample may be adjusted by using an optimization objective that a probability of the to-be-optimized adversarial sample being recognized as the fourth specified user in the target voiceprint recognition system is the lowest, and a probability of the to-be-optimized adversarial sample being recognized as the any other user in the closed-set registered speaker group is the highest.

In a scenario of attacking the voiceprint recognition system, contrary to the previous embodiment, the fourth specified user in the closed-set registered speaker group may alternatively impersonate the any other user in the closed-set registered speaker group to perform an attack. For the attack type, the to-be-optimized adversarial sample may be optimized by using the following formula.

$$L_{CE}^s(x, t) = \log\left[\sigma(S(x))\right]_s$$

$$L_1^s(x, t) = [S(x)]_s$$

$$L_M^s(x, t) = [S(x)]_s - \max_{i \in G, i \neq s}[S(x)]_i$$

$$L_4^s(x, t) = -\max_{i \in G, i \neq s}[S(x)]_i$$

s represents an original speaker, and is the fourth specified user in this example. i represents the any user other than the fourth specified user in the closed-set registered speaker group. G represents a registered speaker group, and is the closed-set registered speaker group in this example. In the foregoing formula, $[S(x)]_s$ represents a probability in the recognition result that the to-be-optimized adversarial sample belongs to the fourth specified user, and $[S(x)]_i$ represents a probability in the recognition result that the to-be-optimized adversarial sample belongs to the any user other than the fourth specified user in the closed-set registered speaker group. In actual application, the foregoing at least one loss function may be selected for use. The to-be-optimized adversarial sample is adjusted by using an optimization objective that a value of the loss function is minimum, that is, the probability of the to-be-optimized adversarial sample being recognized as the fourth specified user in the target voiceprint recognition system is the lowest, and the probability of the to-be-optimized adversarial sample being recognized as the any other user in the closed-set registered speaker group is the highest.

Finally, the speaker determining is considered. In the recognition type of speaker determining, the original speaker may be any user, and the registered speaker is unique. In other words, there is only one user whose identity can be verified. Therefore, during the speaker determining, there is also a threshold, and whether the original speaker is the registered speaker is determined based on the recognition result and the threshold. This specification lists optimization manners of to-be-optimized adversarial samples corresponding to two different situations in the recognition type of speaker determining.

When the recognition type is the speaker determining, and an attack type of a voice adversarial sample that needs to be obtained is registered speaker testing, the to-be-optimized adversarial sample may be adjusted by using an optimization objective that a probability of the to-be-optimized adversarial sample being recognized as the registered speaker in the target voiceprint recognition system is the lowest.

In a scenario of attacking the voiceprint recognition system, speaker testing is usually for detecting whether the target voiceprint recognition system can implement basic determining, that is, whether the registered speaker can be recognized. In a scenario of speaker testing, the original speaker is the registered speaker. For the attack type, the to-be-optimized adversarial sample may be optimized by using the following formula.

$$L_{BCE}(x, t) = -\log\left[1 - \varphi(S(x))\right]$$

$$L_B(x, t) = S(x) - \theta$$

In the foregoing formula, $S(x)$ represents the recognition result, that is, a probability that the to-be-optimized adversarial sample belongs to the registered speaker. In actual application, the foregoing at least one loss function may be selected for use. The to-be-optimized adversarial sample is adjusted by using an optimization objective that a value of the loss function is minimum, that is, the probability of the to-be-optimized adversarial sample being recognized as the registered speaker in the target voiceprint recognition system is the lowest.

When the recognition type is the speaker determining, and an attack type of a voice adversarial sample that needs to be obtained is that an unrelated speaker impersonates the registered speaker, the to-be-optimized adversarial sample is adjusted by using an optimization objective that a probability of the to-be-optimized adversarial sample being recognized as the registered speaker in the target voiceprint recognition system is the highest.

In a scenario of attacking the voiceprint recognition system, for the speaker determining, the unrelated speaker impersonating the registered speaker is one of the most common attack means. For the attack type, the to-be-optimized adversarial sample may be optimized by using the following formula.

$$L^s_{BCE}(x, t) = -\log\left[\varphi(S(x))\right]$$

$$L^s_B(x, t) = \varphi - S(x)$$

In the foregoing formula, $S(x)$ represents the recognition result, that is, a probability that the to-be-optimized adversarial sample belongs to the registered speaker. In actual application, the foregoing at least one loss function may be selected for use. The to-be-optimized adversarial sample is adjusted by using an optimization objective that a value of the loss function is minimum, that is, the probability of the to-be-optimized adversarial sample being recognized as the registered speaker in the target voiceprint recognition system is the highest.

For various scenarios in different attack manners, this specification provides several loss functions for adjusting to-be-optimized adversarial samples. For each scenario, an action manner of the loss function is the same, that is, the to-be-optimized adversarial sample is adjusted by using an optimization objective that the loss function is as small as possible. In addition, loss functions in each scenario may be independently used, some of the loss functions may be selected for use, or all the loss functions may be used together, all of which can achieve an optimization effect on the to-be-optimized adversarial sample. This is not specifically limited in this specification. It should be noted that, in most situations, a voice adversarial sample satisfying a requirement cannot be directly obtained by performing only one iteration, that is, solving the loss function only once. The voice adversarial sample satisfying the requirement needs to be obtained by performing a plurality of iterations, that is, repeatedly performing steps S102 to S104.

Further, because each of the foregoing loss functions uses the recognition result of the target voiceprint recognition system, in a process of solving each of the foregoing loss functions, whether a specific structure and parameters of the target voiceprint recognition system are known affects the process of solving the loss function to some extent.

When the target voiceprint recognition system is a white box, that is, the structure and parameters of the target voiceprint recognition system can be clearly known, the foregoing loss functions may be solved by using a gradient descent method based on back propagation. When the target voiceprint recognition system is a black box, that is, the structure and parameters of the target voiceprint recognition system are not known, there may be two different situations depending on whether a query access budget for the target voiceprint recognition system is sufficient: When the query access budget is sufficient, the foregoing loss functions may be solved by using a gradient descent method based on gradient estimation and a genetic algorithm that does not rely on a gradient; and when a query access budget is limited, transferability of an adversarial sample may be used to first generate a voice adversarial sample in a white-box manner in another white-box voiceprint recognition system, and then transfer the voice adversarial sample to a black-box target voiceprint recognition system for use.

Preferably, there may be a plurality of specific embodiments for optimizing the to-be-optimized adversarial sample. This specification provides a specific embodiment for reference. Specifically, a discrete sequence of the to-be-optimized adversarial sample may be obtained; values in the discrete sequence of the to-be-optimized adversarial sample are adjusted in the preset manner corresponding to the recognition type, to obtain a target discrete sequence; and the voice adversarial sample is determined based on the target discrete sequence.

Usually, in the discrete sequence of the to-be-optimized adversarial sample in an audio situation, each value is represented as a magnitude of a voice component. The to-be-optimized adversarial sample is adjusted in the foregoing manner, so that an optimized voice adversarial sample can deceive the voiceprint recognition system when an original timbre of the to-be-optimized adversarial sample can be reserved to the greatest extent. For human ears, there is almost no difference between the to-be-optimized adversarial sample and the voice adversarial sample.

S106: Attack the target voiceprint recognition system by using the voice adversarial sample.

After the to-be-optimized adversarial sample is optimized to obtain the voice adversarial sample in step S104, in this step, the target voiceprint recognition system may be attacked by using the voice adversarial sample. Specifically, the target voiceprint recognition system may be attacked by inputting the voice adversarial sample into the target voiceprint recognition system.

In an actual application scenario, the voice adversarial sample inputted into the target voiceprint recognition system may have two different forms. One is that the voice adversarial sample is directly inputted through an application programming interface (Application Programming Interface, API), that is, inputted through an API channel. The other is that the voice adversarial sample is outputted by an audio playback device and then is received by the target voiceprint recognition system, that is, inputted through a physical channel. The API channel input may be implemented by directly inputting the voice adversarial sample to the target voiceprint recognition system. The physical channel input in actual application usually requires manual playback by using an audio playback device, which is complex. Therefore, in this method, a simulated physical adversarial sample is generated in a scrambling manner, to simulate the physical channel input.

Specifically, the adversarial sample may be scrambled in a preset scrambling manner, to obtain the simulated physical adversarial sample; and the target voiceprint recognition system is attacked by using the simulated physical adversarial sample. The scrambling manner includes at least one of ambient noise interference, reverberation interference, and hardware interference.

FIG. 2 shows a process of transmission of an audio in a physical channel. As shown in FIG. 2, in the physical channel, the audio is usually interfered by three types of different noises during the transmission: a hardware noise, a reverberation noise, and an ambient noise. The hardware noise is from a non-uniform frequency response of hardware such as a player and a microphone. Some frequency components of a signal passing through the hardware are augmented, and other frequency components are attenuated. Reverberation is mainly caused by multipath propagation, that is, a signal propagated through a straight line and a reflected signal superimpose at a receiving device. The ambient noise is from sounding sources other than adversarial voices.

For the foregoing three different types of noises, this method provides different transformation functions to scramble the voice adversarial sample. For the ambient noise interference, a transformation function is designed as an additive sum of voice and noise. The noise type may include, but is not limited to, a white Gaussian noise, a music noise, a multi-speaker voice mixing noise, and noises in daily life (such as engine rocking and bird chirping), and the magnitude of the noise is controlled by using a signal-to-noise ratio of a noise to the voice adversarial sample. For reverberation interference, the transformation function is designed as a convolution of a room impulse response and the voice adversarial sample. The room impulse response measures a reverberation situation of specific space, and is related to an absorption coefficient of a material of an object existing in the space and relative positions of the receiving device and the playback device. For hardware interference, the transformation function is designed as a convolution of an impulse response of hardware and the voice adversarial sample. The impulse response of the hardware measures a degree of uneven frequency response of the hardware, and also represents a degree of interference.

Therefore, simulated physical channel input may be implemented by using the transformation function instead of through manual playback.

In actual application, whether the API channel input is used, the simulated physical channel input is used, or a combination thereof is used may be selected based on a specific requirement. This is not specifically limited in this specification.

S108: Determine an evaluation result of the target voiceprint recognition system based on an attack result of the voice adversarial sample against the target voiceprint recognition system.

After the target voiceprint recognition system is attacked by using the voice adversarial sample in step S106, the attack result may be obtained, and the evaluation result of the target voiceprint recognition system is determined based on the attack result. Usually, the attack result may indicate whether the target voiceprint recognition system correctly recognizes each voice adversarial sample.

Further, the evaluation result may include an adversarial success rate and adversarial overheads. During determining of the evaluation result, the attack success rate may be determined based on a quantity of incorrectly recognized voice adversarial samples in the recognition result of the target voiceprint recognition system and a total quantity of voice adversarial samples inputted into the target voiceprint recognition system; and attack overheads are determined based on a cost of generating the voice adversarial sample and a quantity of times of querying the voice adversarial sample in the target voiceprint recognition system.

The attack success rate is used for representing a probability that the target voiceprint recognition system cannot successfully defend against an attack. A higher attack success rate indicates lower security of the target voiceprint recognition system. Otherwise, a lower attack success rate indicates higher security of the target voiceprint recognition system. The attack overheads are used for representing costs required for attacking the target voiceprint recognition system. Higher attack overheads indicate higher costs required for attacking the target voiceprint recognition system. Otherwise, a lower attack overheads indicate lower costs required for attacking the target voiceprint recognition system.

Costs of generating the voice adversarial sample may generally mean a quantity of times of solving the loss function, that is, a quantity of iterations, in a process of adjusting the to-be-optimized adversarial sample to the voice adversarial sample. More iterations indicate higher costs of generating the voice adversarial sample. The quantity of times of querying the voice adversarial sample in the target voiceprint recognition system may be a total quantity of recognition results obtained in the target voiceprint recognition system in a process of generating the voice adversarial sample. A quantity of iterations of generating the voice adversarial sample and the quantity of times querying the voice adversarial sample in the target voiceprint recognition system jointly determine the attack overheads. The attack overheads are positively correlated with the quantity of iterations and the quantity of times of querying. More iterations and larger quantity of times of querying indicate higher attack overheads.

It should be noted that the attack success rate is usually obtained based on attack results of a plurality of voice adversarial samples, and the attack overheads are separately obtained based on each voice adversarial sample.

When the target voiceprint recognition system is evaluated by using the voiceprint recognition system evaluation method provided in this specification, for scenarios corresponding to different attack manners in different recognition types, the voice adversarial sample may be generated in different manners. Finally, the target voiceprint recognition system is attacked by using the voice adversarial sample, and a final evaluation result is obtained. According to the method, a plurality of different attack manners can be covered during evaluation of the target voiceprint recognition system, to obtain an accurate and comprehensive evaluation result.

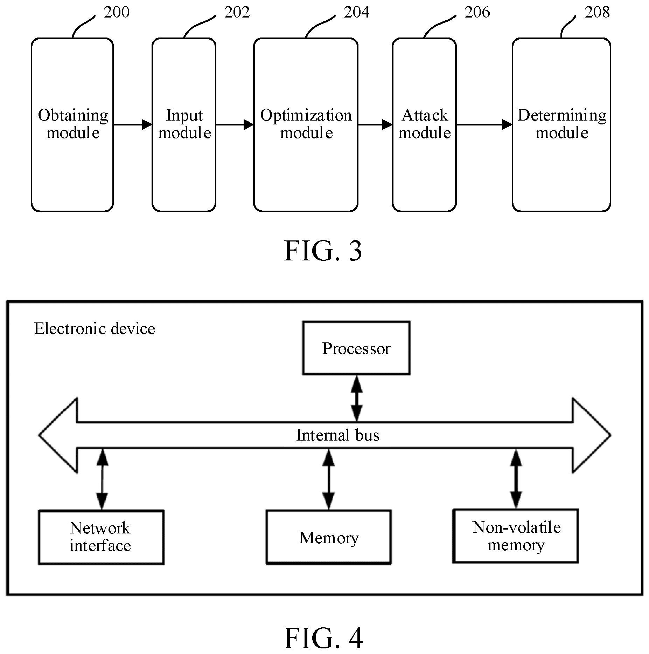

The foregoing describes one or more embodiments of the voiceprint recognition system evaluation method in this specification. Based on the same concept, this specification further provides a corresponding voiceprint recognition system evaluation apparatus, as shown in FIG. 3.

FIG. 3 is a schematic diagram of a voiceprint recognition system evaluation apparatus according to this specification, including an obtaining module 200, configured to: obtain a to-be-evaluated target voiceprint recognition system and a to-be-optimized adversarial sample, and determine a recognition type of the target voiceprint recognition system; an input module 202, configured to input the to-be-optimized adversarial sample into the target voiceprint recognition system to obtain a recognition result of the target voiceprint recognition system for the to-be-optimized adversarial sample; and an optimization module 204, configured to adjust the to-be-optimized adversarial sample based on the recognition result in a preset manner corresponding to the recognition type, to obtain a voice adversarial sample; an attack module 206, configured to attack the target voiceprint recognition system by using the voice adversarial sample; and a determining module 208, configured to determine an evaluation result of the target voiceprint recognition system based on an attack result of the voice adversarial sample against the target voiceprint recognition system.

Optionally, the recognition type includes at least one of open-set speaker recognition, closed-set speaker recognition, and speaker determining. The open-set speaker recognition is for recognizing whether an original speaker is a user in an open-set registered speaker group. The closed-set speaker recognition is for recognizing whether an original speaker is a user in a closed-set registered speaker group. The speaker determining is for recognizing whether an original speaker is a registered speaker.

Optionally, the recognition type is the open-set speaker recognition. An attack type of a voice adversarial sample that needs to be obtained is that an unrelated speaker impersonates a first specified user in the open-set registered speaker group. The optimization module 204 is specifically configured to adjust the to-be-optimized adversarial sample by using an optimization objective that a probability of the to-be-optimized adversarial sample being recognized as the first specified user in the target voiceprint recognition system is the highest.

Optionally, the recognition type is the open-set speaker recognition. An attack type of a voice adversarial sample that needs to be obtained is an attack directly carried out by an unrelated speaker. The optimization module 204 is specifically configured to adjust the to-be-optimized adversarial sample by using an optimization objective that a probability of the to-be-optimized adversarial sample being recognized as any user in the open-set registered speaker group in the target voiceprint recognition system is not greater than a specified threshold.

Optionally, the recognition type is the open-set speaker recognition. An attack type of a voice adversarial sample that needs to be obtained is that a second specified user in the open-set registered speaker group impersonates any other user in the open-set registered speaker group. The optimization module 204 is specifically configured to adjust the to-be-optimized adversarial sample by using an optimization objective that a probability of the to-be-optimized adversarial sample being recognized as the second specified user in the target voiceprint recognition system is the lowest, and a probability of the to-be-optimized adversarial sample being recognized as the any other user is the highest.

Optionally, the recognition type is the open-set speaker recognition. An attack type of a voice adversarial sample that needs to be obtained is that an unrelated speaker impersonates any user in the open-set registered speaker group. The optimization module 204 is specifically configured to adjust the to-be-optimized adversarial sample by using an optimization objective that a probability of the to-be-optimized adversarial sample being recognized as the any user in the open-set registered speaker group in the target voiceprint recognition system is the highest.

Optionally, the recognition type is the closed-set speaker recognition. An attack type of a voice adversarial sample that needs to be obtained is that any user in the closed-set registered speaker group impersonates a third specified user in the closed-set registered speaker group. The optimization module 204 is specifically configured to adjust the to-be-optimized adversarial sample by using an optimization objective that a probability of the to-be-optimized adversarial sample being recognized as the third specified user in the target voiceprint recognition system is the highest.

Optionally, the recognition type is the closed-set speaker recognition. An attack type of a voice adversarial sample that needs to be obtained is that a fourth specified user in the closed-set registered speaker group impersonates any other user in the closed-set registered speaker group. The optimization module 204 is specifically configured to adjust the to-be-optimized adversarial sample by using an optimization objective that a probability of the to-be-optimized adversarial sample being recognized as the fourth specified user in the target voiceprint recognition system is the lowest, and a probability of the to-be-optimized adversarial sample being recognized as the any other user in the closed-set registered speaker group is the highest.

Optionally, the recognition type is the speaker determining. An attack type of a voice adversarial sample that needs to be obtained is registered speaker testing. The optimization module 204 is specifically configured to adjust the to-be-optimized adversarial sample by using an optimization objective that a probability of the to-be-optimized adversarial sample being recognized as the registered speaker in the target voiceprint recognition system is the lowest.

Optionally, the recognition type is the speaker determining. An attack type of a voice adversarial sample that needs to be obtained is that an unrelated speaker impersonates the registered speaker. The optimization module 204 is specifically configured to adjust the to-be-optimized adversarial sample by using an optimization objective that a probability of the to-be-optimized adversarial sample being recognized as the registered speaker in the target voiceprint recognition system is the highest.

Optionally, the optimization module 204 is specifically configured to obtain a discrete sequence of the to-be-optimized adversarial sample; adjust values in the discrete sequence of the to-be-optimized adversarial sample in the preset manner corresponding to the recognition type, to obtain a target discrete sequence; and determine the voice adversarial sample based on the target discrete sequence.

Optionally, the attack module 206 is specifically configured to scramble the adversarial samples in a preset scrambling manner to obtain a simulated physical adversarial sample; and attack the target voiceprint recognition system by using the simulated physical adversarial sample.

Optionally, the scrambling manner includes at least one of ambient noise interference, reverberation interference, and hardware interference.

Optionally, the evaluation result includes an adversarial success rate and adversarial overheads. The determining module 208 is specifically configured to determine an attack success rate based on a quantity of incorrectly recognized voice adversarial samples in the recognition result of the target voiceprint recognition system and a total quantity of voice adversarial samples inputted into the target voiceprint recognition system; and determine attack overheads based on a cost of generating the voice adversarial sample and a quantity of times of querying the voice adversarial sample in the target voiceprint recognition system.

This specification further provides a computer-readable storage medium. The storage medium stores a computer program. The computer program may be configured to perform the voiceprint recognition system evaluation method provided in FIG. 1.

This specification further provides a schematic diagram of a structure of an electronic device shown in FIG. 4 and corresponding to FIG. 1. As shown in FIG. 4, from the perspective of hardware, the electronic device includes a processor, an internal bus, a network interface, a memory, and a non-volatile memory, and certainly may further include hardware required by other services. The processor reads a corresponding computer program from the non-volatile memory into the memory and then runs the computer program, to implement the voiceprint recognition system evaluation method in FIG. 1. Certainly, in addition to a software implementation, this specification does not exclude implementations, such as a logical device or a combination of software and hardware. That is, execution entities of the following processing procedure are not limited to each logical units, and may alternatively be hardware or a logical device.

In the 1990s, improvements in a technology can be clearly categorized as hardware improvements (for example, improvements to a circuit structure such as a diode, a transistor, a switch, etc.) and software improvements (improvements to a method procedure). However, with the development of technology, improvements of many method procedures can be considered as direct improvements of hardware circuit structures. Designers almost all program an improved method procedure to a hardware circuit, to obtain a corresponding hardware circuit structure. Therefore, it does not mean that the improvement of a method procedure cannot be implemented by using a hardware entity module. For example, a programmable logic device (PLD) such as a field programmable gate array (FPGA) is a type of integrated circuit whose logic function is determined by a user by programming the device. The designers perform voluntary programming to "integrate" a digital system into a single PLD without requiring a chip manufacturer to design and prepare a dedicated integrated circuit chip. In addition, instead of making an integrated circuit chip manually, the programming is mostly implemented by using "logic compiler" software, which is similar to the software compiler used to write programs. Original code before compiling is also written in a specific programming language, which is referred to as hardware description language (HDL). There are many types of HDLs, such as advanced boolean expression language (ABEL), Altera hardware description language (AHDL), Confluence, Cornell University programming language (CUPL), HDCal, Java hardware description language (JHDL), Lava, Lola, MyHDL, PALASM, Ruby hardware description language (RHDL), etc. Currently, very-high-speed itegrated circuit hardware description language (VHDL) and Verilog are most commonly used. A person skilled in the art should also understand that as long as a method procedure is logically programmed and then programmed to an integrated circuit by using the foregoing hardware description languages, a hardware circuit that implements the logical method procedure can be easily obtained.

The controller can be implemented in any suitable manner. For example, the controller can use the form of, for example, a microprocessor or processor and a computer-readable medium storing computer-readable program code (for example, software or firmware) executable by the processor, a logic gate, a switch, an application-specific integrated circuit (ASIC), a programmable logic controller, and an embedded microcontroller. Examples of the controller include, but are not limited to, the following microcontrollers: ARC 625D, Atmel AT91SAM, Microchip PIC18F26K20, and Silicone Labs C8051F320. The memory controller can also be implemented as part of the memory control logic. A person skilled in the art will also appreciate that, in addition to implementing, by logically programming the method steps, the controller in the form of pure computer-readable program code, it is also possible to implement the controller in the form of a logic gate, switch, application-specific integrated circuit, programmable logic controller, and embedded microcontroller and other forms to achieve the same function. Such a controller can thus be considered as a hardware component and apparatuses included therein for implementing various functions can also be considered as structures inside the hardware component. Alternatively, apparatuses configured to implement various functions can be considered as both software modules implementing the method and structures inside the hardware component.

The system, the apparatus, the module or the unit described in the foregoing embodiments may be specifically implemented by a computer chip or an entity, or implemented by a product having a certain function. A typical implementation device is a computer. Specifically, for example, the computer may be a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, when the apparatus is described, the apparatus is divided into units according to functions, which are separately described. Certainly, during implementation of this specification, the functions of the units may be implemented in the same piece of or a plurality of pieces of software and/or hardware.

A person skilled in the art should understand that embodiments of this specification may be provided as a method, a system, or a computer program product. Therefore, this specification may use a form of hardware-only embodiments, software-only embodiments, or embodiments with a combination software and hardware. In addition, this specification may use a form of a computer program product that is implemented on one or more computer-usable storage media (including but not limited to a disk memory, a CD-ROM, an optical memory, and the like) that include computer-usable program code.

This specification is described with reference to the flowcharts and/or block diagrams of the method, the device (system), and the computer program product according to embodiments of this specification. It should be understood that computer program instructions can implement each procedure and/or block in the flowcharts and/or block diagrams and a combination of procedures and/or blocks in the flowcharts and/or block diagrams. These computer program instructions may be provided to a general-purpose computer, a special-purpose computer, an embedded processor, or a processor of another programmable data processing device to generate a machine, so that an apparatus configured to implement functions specified in one or more procedures in the flowcharts and/or one or more blocks in the block diagrams is generated by using instructions executed by the computer or the processor of another programmable data processing device.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, a computing device includes one or more processors (CPU), an input/output interface, a network interface, and a memory.

The memory may include a form such as a volatile memory, a random access memory (RAM), and/or a non-volatile memory such as a read-only memory (ROM) or a flash memory (flash RAM) in a computer-readable medium. The memory is an example of the computer-readable medium.

The computer-readable medium includes a non-volatile medium and a volatile medium, a removable medium and a non-removable medium, which may implement storage of information by using any method or technology. The information may be a computer-readable instruction, a data structure, a program module, or other data. Examples of a computer storage medium include but are not limited to a phase-change memory (PRAM), a static random access memory (SRAM), a dynamic random access memory (DRAM), other type of random access memory (RAM), a read-only memory (ROM), an electrically erasable programmable read-only memory (EEPROM), a flash memory or other memory technology, a compact disc read-only memory (CD-ROM), a digital versatile disc (DVD) or other optical storage, a cassette tape, a magnetic tape, a magnetic disk storage or other magnetic storage device, or any other non-transmission medium, which may be configured to store information accessible by a computing device. According to the definitions in this specification, the computer-readable medium does not include transitory computer-readable media (transitory media), such as a modulated data signal and a modulated carrier.

It should be further noted that the terms "include", "comprise", or any variants thereof are intended to cover a non-exclusive inclusion. Therefore, a process, method, article, or device that includes a series of elements not only includes such elements, but also includes other elements not specified expressly, or may include inherent elements of the process, method, article, or device. Unless otherwise specified, an element limited by "include a/an..." does not exclude other same elements existing in the process, the method, the article, or the device that includes the element.

A person skilled in the art should understand that embodiments of this specification may be provided as a method, a system, or a computer program product. Therefore, this specification may use a form of hardware-only embodiments, software-only embodiments, or embodiments with a combination of software and hardware. In addition, this specification may use a form of a computer program product that is implemented on one or more computer-usable storage media (including but not limited to a disk memory, a CD-ROM, an optical memory, and the like) that include computer-usable program code.

This specification can be described in the general context of computer-executable instructions executed by a computer, for example, program modules. Generally, the program module includes a routine, a program, an object, a component, a data structure, and the like for executing a particular task or implementing a particular abstract data type. This specification may alternatively be implemented in a distributed computing environment in which tasks are performed by remote processing devices connected by using a communication network. In a distributed computing environment, the program module may be located in both local and remote computer storage media including storage devices.

Embodiments of this specification are all described in a progressive manner. For same or similar parts in embodiments, refer to these embodiments. Descriptions of each embodiment focus on a difference from other embodiments. Especially, a system embodiment is basically similar to a method embodiment, and therefore is described briefly; for related parts, reference may be made to partial descriptions in the method embodiment.

The foregoing descriptions are merely embodiments of this specification, and are not intended to limit this specification. For a person skilled in the art, various modifications and variations may be made to this specification. Any modification, equivalent replacements, and improvement made within the spirit and principle of this specification shall fall within the scope of the claims of this specification.

## Claims

1. A voiceprint recognition system evaluation method, comprising:

   obtaining a to-be-evaluated target voiceprint recognition system and a to-be-optimized adversarial sample, and determining a recognition type of the target voiceprint recognition system;

inputting the to-be-optimized adversarial sample into the target voiceprint recognition system to obtain a recognition result of the target voiceprint recognition system for the to-be-optimized adversarial sample;

adjusting the to-be-optimized adversarial sample based on the recognition result in a preset manner corresponding to the recognition type, to obtain a voice adversarial sample;

attacking the target voiceprint recognition system by using the voice adversarial sample; and

determining an evaluation result of the target voiceprint recognition system based on an attack result of the voice adversarial sample against the target voiceprint recognition system.

2. The method according to claim 1, wherein the recognition type comprises at least one of open-set speaker recognition, closed-set speaker recognition, and speaker determining, the open-set speaker recognition is for recognizing whether an original speaker is a user in an open-set registered speaker group, the closed-set speaker recognition is for recognizing whether an original speaker is a user in a closed-set registered speaker group, and the speaker determining is for recognizing whether an original speaker is a registered speaker.

3. The method according to claim 2, wherein the recognition type is the open-set speaker recognition, and an attack type of a voice adversarial sample that needs to be obtained is that an unrelated speaker impersonates a first specified user in the open-set registered speaker group; and

the adjusting the to-be-optimized adversarial sample in a preset manner corresponding to the recognition type specifically comprises:

adjusting the to-be-optimized adversarial sample by using an optimization objective that a probability of the to-be-optimized adversarial sample being recognized as the first specified user in the target voiceprint recognition system is the highest.

4. The method according to claim 2, wherein the recognition type is the open-set speaker recognition, and an attack type of a voice adversarial sample that needs to be obtained is an attack directly carried out by an unrelated speaker; and

the adjusting the to-be-optimized adversarial sample in a preset manner corresponding to the recognition type specifically comprises:

adjusting the to-be-optimized adversarial sample by using an optimization objective that a probability of the to-be-optimized adversarial sample being recognized as any user in the open-set registered speaker group in the target voiceprint recognition system is not greater than a specified threshold.

5. The method according to claim 2, wherein the recognition type is the open-set speaker recognition, and an attack type of a voice adversarial sample that needs to be obtained is that a second specified user in the open-set registered speaker group impersonates any other user in the open-set registered speaker group; and

the adjusting the to-be-optimized adversarial sample in a preset manner corresponding to the recognition type specifically comprises:

adjusting the to-be-optimized adversarial sample by using an optimization objective that a probability of the to-be-optimized adversarial sample being recognized as the second specified user in the target voiceprint recognition system is the lowest, and a probability of the to-be-optimized adversarial sample being recognized as the any other user is the highest.

6. The method according to claim 2, wherein the recognition type is the open-set speaker recognition, and an attack type of a voice adversarial sample that needs to be obtained is that an unrelated speaker impersonates any user in the open-set registered speaker group; and

the adjusting the to-be-optimized adversarial sample in a preset manner corresponding to the recognition type specifically comprises:

adjusting the to-be-optimized adversarial sample by using an optimization objective that a probability of the to-be-optimized adversarial sample being recognized as the any user in the open-set registered speaker group in the target voiceprint recognition system is the highest.

7. The method according to claim 2, wherein the recognition type is the closed-set speaker recognition, and an attack type of a voice adversarial sample that needs to be obtained is that any user in the closed-set registered speaker group impersonates a third specified user in the closed-set registered speaker group; and

the adjusting the to-be-optimized adversarial sample in a preset manner corresponding to the recognition type specifically comprises:

adjusting the to-be-optimized adversarial sample by using an optimization objective that a probability of the to-be-optimized adversarial sample being recognized as the third specified user in the target voiceprint recognition system is the highest.

8. The method according to claim 2, wherein the recognition type is the closed-set speaker recognition, and an attack type of a voice adversarial sample that needs to be obtained is that a fourth specified user in the closed-set registered speaker group impersonates any other user in the closed-set registered speaker group; and

the adjusting the to-be-optimized adversarial sample in a preset manner corresponding to the recognition type specifically comprises:

adjusting the to-be-optimized adversarial sample by using an optimization objective that a probability of the to-be-optimized adversarial sample being recognized as the fourth specified user in the target voiceprint recognition system is the lowest, and a probability of the to-be-optimized adversarial sample being recognized as the any other user in the closed-set registered speaker group is the highest.

9. The method according to claim 2, wherein the recognition type is the speaker determining, and an attack type of a voice adversarial sample that needs to be obtained is registered speaker testing; and

the adjusting the to-be-optimized adversarial sample in a preset manner corresponding to the recognition type specifically comprises:

adjusting the to-be-optimized adversarial sample by using an optimization objective that a probability of the to-be-optimized adversarial sample being recognized as the registered speaker in the target voiceprint recognition system is the lowest.

10. The method according to claim 2, wherein the recognition type is the speaker determining, and an attack type of a voice adversarial sample that needs to be obtained is that an unrelated speaker impersonates the registered speaker; and

the adjusting the to-be-optimized adversarial sample in a preset manner corresponding to the recognition type specifically comprises:

adjusting the to-be-optimized adversarial sample by using an optimization objective that a probability of the to-be-optimized adversarial sample being recognized as the registered speaker in the target voiceprint recognition system is the highest.

11. The method according to claim 1, wherein the adjusting the to-be-optimized adversarial sample in a preset manner corresponding to the recognition type, to obtain a voice adversarial sample specifically comprises:

obtaining a discrete sequence of the to-be-optimized adversarial sample;
adjusting values in the discrete sequence of the to-be-optimized adversarial sample in the preset manner corresponding to the recognition type, to obtain a target discrete sequence; and
determining the voice adversarial sample based on the target discrete sequence.

12. The method according to claim 1, the attacking the target voiceprint recognition system by using the voice adversarial sample specifically comprises:

scrambling the voice adversarial sample in a preset scrambling manner to obtain a simulated physical adversarial sample; and
attacking the target voiceprint recognition system by using the simulated physical adversarial sample.

13. The method according to claim 12, wherein the scrambling manner comprises at least one of ambient noise interference, reverberation interference, and hardware interference.

14. The method according to claim 1, wherein the evaluation result comprises an adversarial success rate and adversarial overheads; and

the determining an evaluation result of the target voiceprint recognition system based on an attack result of the voice adversarial sample against the target voiceprint recognition system specifically comprises:

determining an attack success rate based on a quantity of incorrectly recognized voice adversarial samples in the recognition result of the target voiceprint recognition system and a total quantity of voice adversarial samples inputted into the target voiceprint recognition system; and
determining attack overheads based on a cost of generating the voice adversarial sample and a quantity of times of querying the voice adversarial sample in the target voiceprint recognition system.

15. A voiceprint recognition system evaluation apparatus, comprising:

an obtaining module, configured to obtain a to-be-evaluated target voiceprint recognition system and a to-be-optimized adversarial sample, and determine a recognition type of the target voiceprint recognition system;

an input module, configured to input the to-be-optimized adversarial sample into the target voiceprint recognition system to obtain a recognition result of the target voiceprint recognition system for the to-be-optimized adversarial sample;

an optimization module, configured to adjust, the to-be-optimized adversarial sample based on the recognition result in a preset manner corresponding to the recognition type, to obtain a voice adversarial sample;

an attack module, configured to attack the target voiceprint recognition system by using the voice adversarial sample; and

a determining module, configured to determine an evaluation result of the target voiceprint recognition system based on an attack result of the voice adversarial sample against the target voiceprint recognition system.

16. A computer-readable storage medium, wherein the storage medium stores a computer program, and the computer program implements the method according to any one of claims 1 to 14 when being executed by a processor.

17. An electronic device, comprising a memory, a processor, and a computer program stored on the memory and capable of being run on the processor, wherein the processor implements the method according to any one of claims 1 to 14 when executing the program.

S100

Obtain a to-be-evaluated target voiceprint recognition system and a to-be-optimized adversarial sample, and determine a recognition type of the target voiceprint recognition system

S102

Input the to-be-optimized adversarial sample into the target voiceprint recognition system to obtain a recognition result of the target voiceprint recognition system for the to-be-optimized adversarial sample

S104

Adjust the to-be-optimized adversarial sample based on the recognition result in a preset manner corresponding to the recognition type, to obtain a voice adversarial sample

S106

Attack the target voiceprint recognition system by using the voice adversarial sample

S108

Determine an evaluation result of the target voiceprint recognition system based on an attack result of the voice adversarial sample against the target voiceprint recognition system

FIG. 1

FIG. 2

| 200 | 202 | 204 | 206 | 208 |
|---|---|---|---|---|
| Obtaining module | Input module | Optimization module | Attack module | Determining module |

FIG. 3

Electronic device

Processor

Internal bus

Network interface

Memory

Non-volatile memory

FIG. 4

## INTERNATIONAL SEARCH REPORT

| International application No. |
| --- |
| **PCT/CN2024/107752** |

**A. CLASSIFICATION OF SUBJECT MATTER**

G10L17/04(2013.01)i; G10L17/02(2013.01)i; G10L25/48(2013.01)i; H04L9/40 (2022.01)i

According to International Patent Classification (IPC) or to both national classification and IPC

**B. FIELDS SEARCHED**

Minimum documentation searched (classification system followed by classification symbols)

IPC:G10L, H04L

Documentation searched other than minimum documentation to the extent that such documents are included in the fields searched

Electronic data base consulted during the international search (name of data base and, where practicable, search terms used)

CNTXT, CNABS, CNKI, ENTXT: 声纹, 识别, 攻击, 欺骗, 对抗, 样本, sample, voiceprint, recognition, countermeasure, attack, speaker

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116959456 A (ALIPAY (HANGZHOU) INFORMATION TECHNOLOGY CO., LTD.) 27 October 2023 (2023-10-27)<br>description, paragraphs 74-207, and figures 1-3 | 1-17 |
| A | CN 115346532 A (CHINA MOBILE COMMUNICATIONS GROUP CO., LTD.) 15 November 2022 (2022-11-15)<br>description, paragraphs 45-112, and figures 1-3 | 1-17 |
| A | CN 115620730 A (GUANGZHOU UNIVERSITY) 17 January 2023 (2023-01-17)<br>entire document | 1-17 |
| A | CN 113113023 A (ARMY ENGINEERING UNIVERSITY OF PLA) 13 July 2021 (2021-07-13)<br>entire document | 1-17 |
| A | US 2017287490 A1 (INTEL CORP.) 05 October 2017 (2017-10-05)<br>entire document | 1-17 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 November 2024** | **04 November 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/107752**

| Patent document cited in search report | | | Publication date (day/month/year) | Patent family member(s) | | | Publication date (day/month/year) |
|---|---|---|---|---|---|---|---|
| CN | 116959456 | A | 27 October 2023 | None | | | |
| CN | 115346532 | A | 15 November 2022 | None | | | |
| CN | 115620730 | A | 17 January 2023 | None | | | |
| CN | 113113023 | A | 13 July 2021 | None | | | |
| US | 2017287490 | A1 | 05 October 2017 | US | 9972322 | B2 | 15 May 2018 |
| | | | | WO | 2017172113 | A1 | 05 October 2017 |

Form PCT/ISA/210 (patent family annex) (July 2022)